# EUROPEAN PATENT SPECIFICATION

(11) **EP 2 137 008 B1**
(45) Date of publication and mention of the grant of the patent: **05.05.2021**
(21) Application number: 07723342.7
(22) Date of filing: 16.03.2007
(51) Int. Cl.: B60C 23/06

(54) **INDIRECT TIRE PRESSURE MONITORING**
VERFAHREN ZUR INDIREKTEN REIFENDRUCKÜBERWACHUNG
SURVEILLANCE INDIRECTE DE LA PRESSION DE PNEUS

(43) Date of publication of application: 30.12.2009
(73) Proprietor: Nira Dynamics AB, 583 30 Linköping (SE)
(72) Inventor: STENMAN, Anders, S-58229 Linköping (SE); DREVO, Markus, S-58236 Linköping (SE); LINDSKOG, Peter, S-58331 Linköping (SE); GUSTAVSSON, Tony, S-43639 Askim (SE); GUSTAVSSON, Fredrik, S-58663 Linköping (SE)
(74) Representative: Samson & Partner Patentanwälte mbB
(86) International application number: PCT/EP2007/002364
(87) International publication number: WO 2008/113376

(56) References cited:
- WO-A-2005/005993
- US-A- 5 982 279
- US-A1- 2003 172 728
- US-B1- 6 385 553

## Description

### Field of the invention

The present invention relates to a device, a method, a system and computer program product for indirect tire pressure monitoring for detecting tire pressure deviation in tires of a vehicle, wherein relative and individual tire pressure deviation data is computed on the basis of data indirectly indicating tire pressure of at least one tire.

### Background of the invention

Monitoring of tire pressure can be assumed to become a standard functionality in vehicles, at least in cars and trucks, not only due to governmental and legal regulations but also in view of a general demand for enhanced vehicle safety.

Generally, tire pressure monitoring can be accomplished directly and indirectly.

In direct tire pressure monitoring, a current pressure in a vehicle tire is directly measured, e.g. by means of a sensor arranged inside the tire. An example for direct tire pressure monitoring is described, e.g., in US 7,111,507 B2. Direct tire pressure monitoring allows to monitor tire pressure for each tire individually.

Indirect tire pressure monitoring uses information, which - in contrast to directly obtained pressure values - is somehow related to the tire pressure. Commonly, such information may be provided by further control and/or detection devices of vehicles, such as ECUs (electronic control unit), antilock braking systems, dynamic stability systems, anti-spin systems and traction control systems, in form of digital and/or analog data and/or signals. The information may include the rotational speed or angular velocity of the tire or its wheel, respectively, which information is then used as basis to calculate or estimate a value representing tire pressure. An example for indirect tire pressure monitoring is described, e.g., in DE 100 44 14 A1 and EP 0 983 154 A1. A further example is known from US 2003/172728 A1, which discloses to estimate the pneumatic pressure, based on a wheel angular velocity and a lateral movement indication signal.

Known indirect tire pressure monitoring approaches are capable of detecting tire pressure deviations in a single tire up to a number of tires smaller than the number of all tires (assuming that each vehicle wheel is equipped with a single tire). Known indirect tire pressure monitoring approaches do not allow tire pressure monitoring for each tire.

To monitor all tires, e.g., WO 03/006268 discloses to use a combination of direct and indirect tire pressure monitoring. This approach however requires, for direct tire pressure monitoring, pressure sensing or measuring means at/on/in each tire.

### Object of the invention

The object of present invention is to improve indirect tire pressure monitoring to overcome drawbacks of prior art approaches, particularly those mentioned above, and to allow indirect tire pressure monitoring for all vehicle tires without the need for any direct monitoring of tire pressure.

### Summary of the invention

To solve the above object, the present invention provides a device, a method, a system and a computer program product as defined in the independent claims.

Other features of the invention will be apparent from the dependent claims.

### Short description of the drawings

Embodiments of the invention will now be described, by way of example and with reference to the accompanying drawings, in which:
Fig. 1 schematically illustrates an indirect tire pressure monitoring system according to an embodiment of the present invention; and
Fig. 2 schematically illustrates a unit for determining tire pressure deviation data according to an embodiment of the present invention.

### Description of preferred embodiments

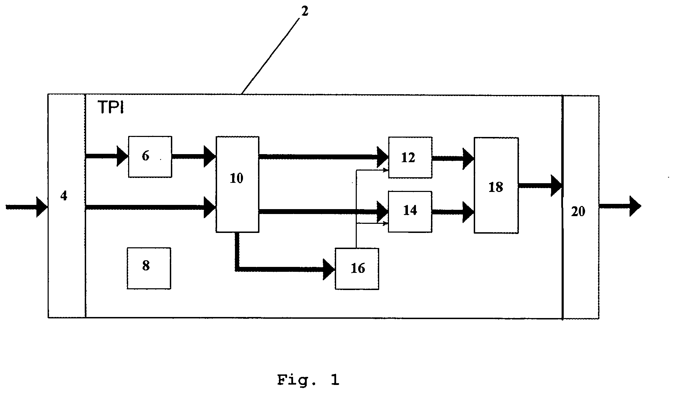

Fig. 1 schematically illustrates a system according to the present invention, particularly in form of a tire pressure deviation (TPD) warning system 2 using indirect tire pressure monitoring.

The present invention is provided for use in any kind of vehicle having at least one wheel equipped with at least one tire. The term "vehicle" as used herein comprises any type of vehicle, such as cars, bikes, trucks, trailers, and the like, where information on the basis of which indirect tire pressure monitoring is possible.

A "pressure deviation" in a tire may be detected if the tire pressure actually determined for the tire differs from a normal/predefined/desired tire pressure and/or differs from the pressure of one or more other tires by a predetermined threshold value.

However, before continuing with descriptions of the drawings, some further observations to further aspects of the present invention are given. More detailed observation to device related aspects of the present invention also apply to corresponding method, system and computer program related aspects of the present invention even if not explicitly noted.

In the device of the present invention it is possible that the relative tire pressure unit is adapted to generate the relative tire pressure deviation data on the basis of vehicle data indicating at least one relative tire pressure difference with respect to at least two different tires. In such cases, the relative tire pressure unit may be operated on the basis of roll radius based indirect tire pressure monitoring (e.g. using wheel/tire radius analysis) based on ,e.g., respective models and/or algorithms.

In the device of the present invention it is possible that the individual tire pressure unit is adapted to generate the individual tire pressure deviation data on the basis of vehicle data indicating tire pressure of at least one tire. Here, the individual tire pressure unit may use wheel/tire spectrum analysis based on ,e.g., respective models and/or algorithms.

In the device of present invention, the at least one of the relative tire pressure unit and the individual tire pressure unit may adapted to generate the individual tire pressure deviation data on the basis of correlation analysis such as, e.g. disclosed in WO 2005/005993 A1.

In the device of the present invention it is possible that the receiving part comprises an interface unit being adapted to receive the at least one vehicle data from at least one of a control unit, a monitoring unit and a sensor unit of the vehicle and being adapted to output the at least one vehicle data; wherein the interface unit is provided as separate unit.

In the device of the present invention it is possible that the receiving part comprises a memory unit being adapted to store at least one of the at least one vehicle data; wherein the memory unit is provided as separate unit.

In the device of the present invention it is possible that the receiving part comprises a preprocessing unit being adapted to preprocess the at least one vehicle data at least with respect to the information indirectly indicating tire pressure to generate the tire pressure indicating data; wherein the preprocessing unit is provided as separate unit.

Here, the preprocessing unit may be adapted to preprocess also at least one further data of the at least one vehicle data.

The device of the present invention may further comprise, as separate unit, a diagnosis control unit, which is adapted to perform analysis of at least one of the received at least one vehicle data and data internal to the device and to generate at least one of device status data and error indicating data on the basis of the analysis.

The device of the present invention may further comprise, as separate unit, a dynamic state detector unit, which is adapted to detect at least one of vehicle driving situations and vehicle driving scenarios and to output driving situation/scenario indicating data.

In some embodiments the dynamic state detector unit may be adapted to detect at least one of vehicle driving situations and vehicle driving scenarios on the basis of the at least one vehicle data outputted by the interface unit; on the basis of the at least one stored vehicle data from the memory unit; and/or on the basis of the at least one preprocessed vehicle data from the preprocessing unit.

In the device of present invention, at least one of the relative tire pressure unit and the individual tire pressure unit may be coupled to receive the driving situation/scenario indicating data from the dynamic state detector unit and to compute the relative tire pressure deviation data and the individual tire pressure deviation data, respectively, on the basis the driving situation/scenario indicating data.

The device of present invention may further comprise, as a separate unit, a combination unit being coupled to receive the relative tire pressure deviation data if being generated by the relative tire pressure unit and the individual tire pressure deviation data if being generated by the individual tire pressure unit and being adapted to determine, on the basis of received data, tire pressure condition data, which indicate a tire pressure condition of the at least one tire.

The combination unit may be adapted to generate at least one warning data on the basis of the tire pressure condition data, the at least one warning data indicating a tire pressure condition to be warned of.

In the device of the present invention it is possible that the at least one vehicle data includes at least one of
- vehicle data indicative of ambient temperature;
- vehicle data indicative of a temperature of an engine of the vehicle;
- vehicle data indicative of an engine torque of an engine of the vehicle;
- vehicle data indicative of a torque acting on the at least one tire;
- vehicle data indicative of a engine speed of an engine of the vehicle;
- vehicle data indicative of a yaw rate of the vehicle;
- vehicle data indicative of a speed of the vehicle;
- vehicle data indicative of at least one of a lateral acceleration and a longitudinal acceleration of the vehicle;
- vehicle data indicative of a steering wheel angle of a steering wheel of the vehicle;
- vehicle data indicative of a driving condition of the vehicle, particularly a braking condition;
- vehicle data indicative that a gear shift of the vehicle is in progress;
- vehicle data indicative that a braking system of the vehicle is operating;
- vehicle data indicative of brake pressure; and
- vehicle data indicative that at least one active control device of the vehicle is active.

In the method of present invention, the step of generating the relative tire pressure deviation data may be performed on the basis of vehicle data indicating at least one tire pressure difference with respect to at least two different tires. Here, roll radius based indirect tire pressure monitoring (e.g. using wheel/tire radius analysis) based on ,e.g., respective models and/or algorithms may be used.

In the method of present invention, the step of generating the individual tire pressure deviation data may be performed on the basis of vehicle data indicating tire pressure of at least one tire. Here, use wheel/tire spectrum analysis based on ,e.g., respective models and/or algorithms.

In the method of present invention, the step of generating the individual tire pressure deviation data may be performed on the basis of correlation analysis such as, e.g. disclosed in WO 2005/005993 A1.

In the method of present invention, the step of receiving the at least one vehicle data may comprise a separate step of receiving the at least one vehicle data via an interface from at least one of a control unit, a monitoring unit and a sensor unit of the vehicle.

In the method of present invention, the step of receiving at least one vehicle data may comprise a separate step of storing at least one of the at least one vehicle data.

In the method of present invention, the step of receiving at least one vehicle data may comprises a separate step of preprocessing the at least one vehicle data at least with respect to the information indirectly indicating tire pressure to generate the tire pressure indicating data.

The preprocessing step may include a step of preprocessing also at least one further data of the at least one vehicle data.

The method of the present invention may further comprise a separate step of diagnosis controlling to perform analysis of at least one of the received at least one vehicle data and data generated by steps of the method itself and to generate at least one of device status data and error indicating data on the basis of the analysis.

The method of the present invention may further comprise a separate step of dynamic state detecting to detect at least one of vehicle driving situations and vehicle driving scenarios and to output driving situation/scenario indicating data.

In some embodiments the step of dynamic state detecting may includes a step of detecting at least one of vehicle driving situations and vehicle driving scenarios on the basis of the at least one vehicle data provided by step of receiving via an interface; may include a step of detecting at least one of vehicle driving situations and vehicle driving scenarios on the basis of the at least one stored vehicle data stored in the storing step; and/or may include a step of detecting at least one of vehicle driving situations and vehicle driving scenarios on the basis of the at least one preprocessed vehicle data from the preprocessing step.

In the method of the present invention it is possible that at least one of the step of generating the relative tire pressure data and the step of generating the individual tire pressure data includes a step of generating the relative tire pressure deviation data and the individual tire pressure deviation data, respectively, on the basis of the driving situation/scenario indicating data.

The method of the present invention may further comprise a separate step of combining including receiving the relative tire pressure deviation data if being generated by the relative tire pressure unit and the individual tire pressure deviation data if being generated by the individual tire pressure unit and determining, on the basis of received data, tire pressure condition data, which indicate a tire pressure condition of the at least one tire.

The combining step may include a step of generating at least one warning data on the basis of the tire pressure condition data, the at least one warning data indicating a tire pressure condition to be warned of.

In the method of the present invention, the at least one vehicle data may include at least one of
- vehicle data indicative of ambient temperature;
- vehicle data indicative of a temperature of an engine of the vehicle;
- vehicle data indicative of an engine torque of an engine of the vehicle;
- vehicle data indicative of a torque acting on the at least one tire;
- vehicle data indicative of a engine speed of an engine of the vehicle;
- vehicle data indicative of a yaw rate of the vehicle;
- vehicle data indicative of a speed of the vehicle;
- vehicle data indicative of at least one of a lateral acceleration and a longitudinal acceleration of the vehicle;
- vehicle data indicative of a steering wheel angle of a steering wheel of the vehicle;
- vehicle data indicative of a driving condition of the vehicle, particularly a braking condition;
- vehicle data indicative that a gear shift of the vehicle is in progress;
- vehicle data indicative that a braking system of the vehicle is operating;
- vehicle data indicative of brake pressure; and
- vehicle data indicative that at least one active control device of the vehicle is active.

In some embodiments, the indirect tire pressure monitoring system of the present invention may be adapted to be operated by using the method of the present invention.

The computer program product of the present invention may further comprise program code for carrying out, when executed on a processing system, the steps of at least one of the above-mentioned possible embodiments of the method of the present invention.

The computer program product of the present invention may be stored on a computer-readable storage medium or in a computer-readable storage device.

Now, referring to the drawings again, Fig. 1 schematically illustrates a principle system arrangement according to the present invention, particularly in form an tire pressure deviation (TPD) warning system 2.

The TPD warning system 2 may for example be a hardware and/or software component, which is integrated in an electronic control unit (e.g. ECU) of a vehicle. The system 2 obtains so-called vehicle data by means of an interface unit 4, which may be - in the case of an at least partially software based implementation - an application program interface (API). The vehicle data may include vehicle signals from the vehicle CAN bus e.g. describing the vehicle condition. The vehicle data may (further) include measuring data, information, signals and the like directly obtained and/or indirectly derived from vehicle's sensors, such as rotational speed sensors (as existent in the vehicle's ABS), which indicate angular velocities of rotating wheels and tires, respectively.

In particular, the vehicle data may be indicative of ambient temperature, temperature of an engine of the vehicle, wheel/tire angular velocity, wheel/tire rotational speed, engine torque of an engine of the vehicle, torque acting on the at least one tire, engine speed of an engine of the vehicle, yaw rate of the vehicle, speed of the vehicle, lateral and/or longitudinal acceleration of the vehicle, steering wheel angle of a steering wheel of the vehicle, of a driving condition of the vehicle, particularly a braking condition, gear shift of the vehicle being in progress and an active control device of the vehicle being actively operating.

Wheel/tire angular velocity and/or wheel/tire rotational speed may be used for tire pressure determination and can be considered as information indirectly indicating tire pressure.

To provide such vehicle data, an ECU and/or sensors of the vehicle may be used. For example, temperature sensor(s), yaw rate sensor(s), torque sensor(s), speed sensor(s), accelerator sensor(s), and/or sensors indicating accelerator pedal, clutch pedal and/or braking pedal position(s) my be employed to acquire vehicle data and/or to perform measurements on the basis of which vehicle data may be derived.

The vehicle data may directly provided to units of system 2 and/or may be stored in a memory unit 6 for later use.

A diagnosis control unit 8 performs internal system and input signal checks and sets system status and error codes, which may be considered as device status data and/or error indicating data. If a severe error occurs, this unit can disable the system 2.

Obtained vehicle data may be input to a preprocessing unit 10, which may process (e.g. filters) vehicle data, for example, to remove disturbances and offsets, and may pre-compute vehicle data such that they can be used by other system parts.

Signals output by preprocessing unit 10 are input to a unit for roll radius based indirect tire pressure monitoring, here exemplarily in form of a wheel radius analysis (WRA) unit 12, and/or a wheel spectrum analysis (WSA) unit 14. To WRA unit 12 and a WSA unit 14 will be provided vehicle data (unprocessed and/or processed by preprocessing unit 10) at least indicating wheel/tire angular velocity and/or wheel/tire rotational speed. Further vehicle signals may be related to wheel/tire angular velocity "energy", yaw rate, yaw rate from wheel/tire velocity, engine torque, braking in progress, reverse driving in progress, active control in progress, vehicle speed, longitudinal acceleration, lateral acceleration, wheel slip, normalized traction force, gear shift in progress, data quality indicators (dynamic driving, slip variance, etc.), ambient temperature and vehicle status.

In some embodiments, WRA unit 12 and WSA unit 14 may be further provided data indicating, e.g., special driving conditions (e.g. driving with snow chains, on rough roads, on oval track and in a roundabout etc.). Such data may be generated by a dynamic state detector unit 16 based on vehicle data from interface 4, memory 6 and/or preprocessing unit 10. Thus, data from dynamic state detector unit 16 may be also referred to as vehicle data as they are derived there from and can be considered as driving situation/scenario indicating data according to some embodiments of the present invention.

Wheel radius analysis as executed in the WRA unit 12 are based on the fact that the wheel speed of a wheel depends on the respective wheel radius: the wheel speed increases with decreasing wheel radius. Changes in the wheel radius contain information about changes in the tire pressure of the corresponding wheels, but may also reflect, e.g., vehicle load changes and surface changes or react on driving forces (acceleration, braking, forces in curves etc.).

WRA unit 12 may detect relative changes in tire pressure with respect to at least two tires.

According to embodiments described here, WRA unit 12 may be considered as implementation of the relative tire pressure unit and/or the step of generating relative tire pressure deviation data. Data generated by WRA unit 12 may be considered as implementation of relative tire pressure deviation data.

Based on the wheel angular velocity signals, WSA unit 14 detects changes in the spectral properties of each of the four wheel angular velocity signals. The tire pressure has significant influence on the characteristics of the spectrum of the angular velocity signal; however, further conditions (e.g. driving situation, road surface and temperature) may also have an impact on the angular velocity signal spectrum and may be therefore considered.

WSA unit 14 may detect changes in tire pressure for each wheel individually, for example by calculating a parametric model of the wheel/tire velocity spectrum and using the parameters of this model to calculate a spectral shape factor that condenses the different pressure dependent features of the spectrum into one single scalar quantity.

In further embodiments, WSA unit 14 may use DFT-based approach(es) or method(s) to determine wheel/tire spectrum.

According to embodiments described here, WSA unit 14 may be considered as implementation of the individual tire pressure unit and/or the step of generating individual tire pressure deviation data. Data generated by WSA unit 14 may be considered, in some embodiments of the present invention, as individual tire pressure deviation data.

Tire pressure indicating data may provided by WRA unit 12 only or by WSA unit 14 only or by both WRA unit 12 and WSA unit 14.

In further embodiments, as implementation of at least one of the relative tire pressure unit and the individual tire pressure unit and/or the step of generating individual tire pressure deviation data may be provided by correlation analysis as disclosed in WO 2005/005933 A1.

In such cases and assuming a vehicle having at least one pair of a front and a rear wheel being spaced by a wheel spacing, front wheel/tire speed and rear wheel/tire speed information, which indicates time dependent behavior of the front wheel/tire speed and rear wheel/tire speed, is determined. Then, the front wheel/tire speed and rear wheel/tire speed information is correlated in order to determine a specific correlation feature indicative of the time delay between the front wheel and rear wheel speed signals. On the basis of the correlation feature and the wheel spacing, a velocity of the vehicle may be determined.

The resulting velocity information may be used to in combination with information on relative tire pressure (e.g. relative tire pressure deviation data from WRA unit 12) in order to determine individual tire pressure information and, particularly, individual tire pressure deviation data.

A combination unit 18 obtains data from WRA unit 12 and/or WSA unit 14 and from interface unit 4, memory unit 6 and/or preprocessing unit 10. According to described embodiments, data generated by combination unit 18 may be considered as implementation of tire pressure condition data.

More specifically, data provided to combination unit 18 include tire pressure deviation data of at least one of WRA unit 12 and WSA unit 14. Such data will be used to determine tire pressure condition data indicative of tire pressure deviation condition(s) for the vehicle tire. To this end, combination unit 18 may also use data indicating, e.g., special driving conditions (e.g. driving with snow chains, on rough roads, on oval track and in a roundabout etc.) provided by dynamic state detector unit 16 and/or further vehicle data.

In general, combination unit 18 determines, based on input data, tire pressure deviation condition(s) for each tire separately or for at least two tires together. In embodiments not illustrated, combination unit 18 determines whether tire pressure indicating data indicate a deviation from a preset, desired and/or required tire pressure. To this end, combination unit 18 may additionally take into account further input data, such as data representing a current driving situation, since such data may influence a decision whether an inappropriate tire pressure deviation exists. Such determination(s) may use threshold comparison(s). Then, an inappropriate tire pressure deviation may be ascertained in the case tire pressure indicating data violate an upper and/or lower threshold (e.g. maximally and minimally, respectively, allowable tire pressure).

If an inappropriate tire pressure deviation condition is detected, combination unit 18 may generate warning data, enable a warning signal and the like to inform about the inappropriate tire pressure deviation condition.

Such warning information may be coupled, via an interface unit 20, to an ECU of the vehicle, which in turn may initiate measures suitable in view of the current tire pressure deviation condition (e.g. active control measures for reducing speed, reducing acceleration and/or brake forces and/or torques for the respective tire, etc.; informing a driver of the vehicle by visual information, warning lights, speech and/or sound output). Interface unit 20 may be integrally embodied with interface unit 4 or may provided separately.

In addition or as alternative, warning information may by forwarded to a warning unit (not shown) that performs functions as set forth above for an ECU and/or communicates with an ECU to inform about the inappropriate tire pressure deviation condition. In the case a warning unit is comprised by system 2, communication with external devices may accomplished via interface unit 20. Warning information may be also stored for later analysis.

In some not illustrated embodiments, dynamic state detector unit 16 may comprise sub-units, which will be referred to as detectors. Such detectors may be used to detect specific driving situations and/or scenarios.

For example, dynamic state detector unit 16 may comprise a so-called rough road detector adapted to detect, e.g., roads having a rough surface, gravel roads and the like.

Dynamic state detector unit 16 may comprise a so-called snow chain detector adapted to detect whether a tire and, if applicable, which tire is equipped with a snow chain.

Dynamic state detector unit 16 may comprise a so-called oval track detector adapted to detect whether the vehicle is driven on an oval track (possible with banked curves).

Dynamic state detector unit 16 may comprise a so-called roundabout detector adapted to detect whether the vehicle is driven with a substantially constant and relatively large yaw rate, e.g., in a roundabout.

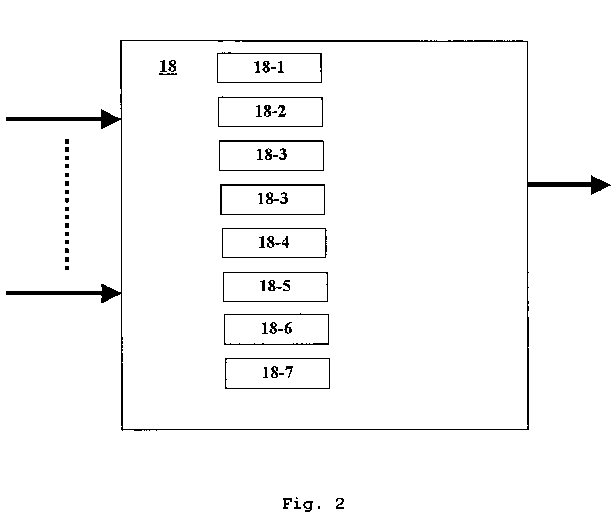

According to the embodiment shown in Fig. 2, combination unit 18 is adapted to perform a more complex procedure to determine tire pressure deviation conditions. As illustrated, combination unit 18 comprises several sub-units 18-1, ..., 18-n, which will be also referred to as detectors. Detectors 18-1, ..., 18-n are used to detect specific tire pressure deviation conditions.

For illustration of such embodiments, it is assumed that detectors 18-1, ..., 18-n comprise a puncture detector 18-1, a diffusion detector 18-2, a flat tire detector 18-3, an asymmetric detector 18-4, a special detector 18-5, a leakage-during-calibration detector 18-6 and a high-sensitivity detector 18-7.

Each of the detectors 18-1, ..., 18-n may be associated to all tires or may comprise sub-detectors (not shown) each associated to a specific tire or each detector type may be provided several times respectively associated to a specific tire. Here, it is assumed that each of the detectors 18-1, ..., 18-n operates for all tires.

Puncture detector 18-1 operates on a short time scale, typically in minutes, in order to detect rapid pressure loss(es) in a tire.

Diffusion detector 18-2 operates on a long time scale, typically hours, to detect slow pressure loss in a tire.

Flat tire detector 18-3 operates on a very short time scale in order to detect rapid and large pressure drops in tire.

Asymmetric detector 18-4 complements the puncture and diffusion detectors to enhance the detection performance in asymmetric tire pressure scenarios. An example of such a situation is a pressure drop in one tire of, e.g., 15% and in another tire of, e.g., 30%. Asymmetric detector 18-4 may be also important for improving the detection performance in special load cases.

Special detector 18-5 complements the puncture and diffusion detectors to enhance the detection performance in situations with no or low torque variations.

Leakage-during-calibration detector 18-6 detects a continuous pressure drop in a tire during system calibration.

High sensitivity detector 18-7 operates on a short time scale to detect repeated tire problems in a tire.

Detectors 18-1, ..., 18-n respectively employ, inter alia, thresholds to determine prevailing of a tire pressure deviation condition for which a respective one of the detectors 18-1, ..., 18-n is dedicated.

As illustrated in Fig. 1, units 4 to 20 are provided as separate units embodied in form of, e.g., separate hardware modules and/or separate software modules. To use separate units has several advantages.

For example, diagnosis control unit 8, which serves for internal checks and checks on input vehicle signals, is separated from unit 4, 6 and 10 to 20. As a result, there is a clear separation between, on the one hand, diagnosis and, on the other hand, main function in terms of tire pressure monitoring, e.g., processing of wheel/tire radius related information.

Data and signal preprocessing functions are not integrated or associated in another manner to only one of WRA unit 12 or WSA unit 14. Rather, preprocessing is accomplished by preprocessing unit 10, which is separated from both WRA unit 12 and WSA unit 14, but supports both thereof. As a result, synergies in preprocessing of data and/or signal conditioning may be used in optimized manner such that data and/or signals of optimized quality can be provided from a single stage, namely preprocessing unit 10, to WRA unit 12 and WSA unit 14.

WRA unit 12 and WSA unit 14 are also separate units, particularly with respect to each other, such that they may be used in parallel. As a result, tire pressure monitoring performance may be enhanced by using complementary properties of WRA unit 12 and WSA unit 14. For example, it may be possible that WRA unit 12 may operate more reliable in driving situations of low speed, while WSA unit 14 may operate more reliable in driving situations of high speed; as another example, it may be possible that WRA unit 12 may be operated on gravel roads, while WSA 14 could be disabled in such driving situations in cases where wheel/tire spectrum analysis may be not suitable. Then, data of that one of units 12 and 14, which performs more optimal, may be used (only) or used with higher priority (e.g. by weighting). Further, availability of tire pressure monitoring functions is maximized, e.g., by providing tire pressure information on individual tires by means of WSA unit 14, while - even at the same time - relative tire pressure information concerning at least two different tires may be provided by WRA unit 12.

Functions to detect driving situations and/or driving scenarios are not integrated or associated in another manner to only one of WRA unit 12 or WSA unit 14. Rather, such detection is accomplished by dynamic state detector unit 16, which is separated from both WRA unit 12 and WSA unit 14, but supports both thereof. As a result, WRA unit 12 and WSA unit 14 obtain information on driving situations and/or driving scenarios from a single stage, namely dynamic state detector unit 16, leading to an optimized use of synergies. Further, dynamic state detector unit 16 allows an increased flexibility because use of vehicle data and/or information derived there may be easily adapted in view of, e.g., different vehicle types and/or tire types. Also, dynamic state detector unit 16 enables activation and deactivation of functions and functionalities provided by detectors thereof, e.g., a rough road detector, a snow chain detector a oval track detector and/or a roundabout detector.

Combination unit 18 also provided as separate unit determines - based on information from WRA unit 12 and/or WSA unit 14 - tire pressure conditions. Means and functions for tire pressure condition determination are provided by combination unit 18 and, in principle, not by WRA unit 12 and WSA unit 14. This results in an optimized performance since combination unit 18 may combine and process information from WRA unit 12 and WSA unit 14 virtually in any way such that - in dependence from, e.g., driving situations, actual tire pressure prevailing for different tires etc. - enhanced performance in tire pressure monitoring may be obtained. Further, combination unit 18 allows an increased flexibility because use of information from WRA unit 12 and/or WSA unit 14 may be easily adapted in view of, e.g., different vehicle types and/or tire types. Also, combination unit 18 enables activation and deactivation of functions and functionalities provided by detectors 18-1, ..., , 18-n.

Each of the interface units 4 and 20 is also formed as separate unit and support input and output, respectively, for the overall system. It is not necessary to use any input or output means dedicated to a specific system part and/or function. The respective functions and performances of interface units 4 and 20 may be optimized in view of, e.g., different vehicle types, ECU types, internal vehicle signaling etc.; this also applies to hardware and software compatibilities with vehicle interface(s) via which vehicle data may be provided.

In general, any of the units 4 to 20 may be modified, optimized or altered in any other way in order to, e.g., achieve vehicle type and/or tire type adaptation without affecting remaining units of system 2. As long as handshake conventions between units are met, internal aspects of units are not relevant for operation of other units.

## Claims

1. A device for indirect tire pressure monitoring for detecting tire pressure deviation in tires of a vehicle, comprising:
- a receiving part being adapted to receive at least one vehicle data from the vehicle, which at least one vehicle data including information indirectly indicating tire pressure of at least one tire, and being adapted to generate pressure indicating data on the basis of the at least one vehicle data, wherein the at least one vehicle data includes at least data indicating angular velocity and/or rotational speed of the at least one tire;
- a relative tire pressure unit (12) being coupled to receive the tire pressure indicating data and being adapted to perform a wheel radius analysis, WRA, and to generate relative tire pressure deviation data on the basis of the tire pressure indicating data; and
- an individual tire pressure unit (14) being coupled to receive the tire pressure indicating data and being adapted to perform a wheel spectrum analysis, WSA, and to generate individual tire pressure deviation data on the basis of the tire pressure indicating data;
- the relative tire pressure unit (12) and the individual tire pressure unit (14) being provided as separate units and being adapted to generate its respective tire pressure deviation data independently from each other;
further comprising, as separate unit, a diagnosis control unit (8), which is adapted to perform analysis of the received at least one vehicle data and to generate error indicating data on the basis of the analysis,
wherein the diagnosis control unit (8) is adapted to disable the device if a severe error occurs.

2. The device of claim 1,
wherein the relative tire pressure unit (12) is adapted to generate the relative tire pressure deviation data on the basis of vehicle data indicating at least one relative tire pressure difference with respect to at least two different tires; and/or
wherein at least one of the relative tire pressure unit (12) and the individual tire pressure unit (14) is adapted to generate the relative tire pressure deviation data on the basis of correlation analysis; and/or
wherein
- the receiving part comprises an interface unit (4) being adapted to receive the at least one vehicle data from at least one of a control unit, a monitoring unit and a sensor unit of the vehicle and being adapted to output the at least one vehicle data; and
- the interface unit (4) is provided as separate unit; and/or
wherein
- the receiving part comprises a memory unit (6) being adapted to store at least one of the at least one vehicle data; and
- the memory unit (6) is provided as separate unit and/or
wherein
- the receiving part comprises a preprocessing unit (10) being adapted to preprocess the at least one vehicle data at least with respect to the information indirectly indicating tire pressure to generate the tire pressure indicating data; and
- the preprocessing unit (10) is provided as separate unit, wherein the preprocessing unit (10) is preferably adapted to preprocess also at least one further data of the at least one vehicle data.

3. The device of one of the preceding claims, further comprising, as separate unit, a dynamic state detector unit (16), which is adapted to detect at least one of vehicle driving situations and vehicle driving scenarios and to output driving situation/scenario indicating data.

4. The device of claim 3
- wherein the dynamic state detector unit (16) is adapted to detect at least one of vehicle driving situations and vehicle driving scenarios on the basis of the at least one vehicle data outputted by the interface unit (4);
- wherein the dynamic state detector unit (16) is adapted to detect at least one of vehicle driving situations and vehicle driving scenarios on the basis of the at least one stored vehicle data from the memory unit (6); and
- the dynamic state detector unit (16) is adapted to detect at least one of vehicle driving situations and vehicle driving scenarios on the basis of the at least one preprocessed vehicle data from the preprocessing unit (10); and/or
wherein at least one of the relative tire pressure unit (12) and the individual tire pressure unit (14) being coupled to receive the driving situation/scenario indicating data from the dynamic state detector unit (16) and to generate the relative tire pressure deviation data and the individual tire pressure deviation data, respectively, on the basis the driving situation/scenario indicating data.

5. The device of one of the preceding claims,
further comprising, as a separate unit, a combination unit (18) being coupled to receive the relative tire pressure deviation data if being generated by the relative tire pressure unit (12) and the individual tire pressure deviation data if being generated by the individual tire pressure unit (14) and being adapted to determine, on the basis of received data, tire pressure condition data, which indicate a tire pressure condition of the at least one tire, wherein the combination unit (18) is preferably adapted to generate at least one warning data on the basis of the tire pressure condition data, the at least one warning data indicating a tire pressure condition to be warned of; and/or
wherein the at least one vehicle data includes at least one of
- vehicle data indicative of ambient temperature;
- vehicle data indicative of a temperature of an engine of the vehicle ;
- vehicle data indicative of an engine torque of an engine of the vehicle;
- vehicle data indicative of a torque acting on the at least one tire;
- vehicle data indicative of a engine speed of an engine of the vehicle;
- vehicle data indicative of a yaw rate of the vehicle;
- vehicle data indicative of a speed of the vehicle;
- vehicle data indicative of at least one of a lateral acceleration and a longitudinal acceleration of the vehicle;
- vehicle data indicative of a steering wheel angle of a steering wheel of the vehicle;
- vehicle data indicative of a driving condition of the vehicle, particularly a braking condition;
- vehicle data indicative that a gear shift of the vehicle is in progress;
- vehicle data indicative that a braking system of the vehicle is operating;
- vehicle data indicative of brake pressure; and
- vehicle data indicative that at least one active control device of the vehicle is active.

6. A method of indirect tire pressure monitoring for detecting tire pressure deviation in tires of a vehicle, comprising the steps of:
- receiving at least one vehicle data from the vehicle, which at least one vehicle data including information indirectly indicating tire pressure of at least one tire, wherein the at least one vehicle data includes at least data indicating angular velocity and/or rotational speed of the at least one tire;
- generating tire pressure indicating data on the basis of the at least one vehicle data;
- performing a wheel radius analysis, WRA, and generating relative tire pressure deviation data on the basis of the tire pressure indicating data; and
- performing a wheel spectrum analysis, WSA, and generating individual tire pressure deviation data on the basis of the tire pressure indicating data; wherein
- the step of generating relative tire pressure deviation data and the step of generating individual tire pressure deviation data are performed in a manner separate and independent from each other;
further comprising a separate step of diagnosis controlling to perform analysis of the received at least one vehicle data and to generate and error indicating data on the basis of the analysis,
wherein the method is disabled if a severe error occurs.

7. The method of claim 6,
wherein step of generating the relative tire pressure deviation data is performed on the basis of vehicle data indicating at least one tire pressure difference with respect to at least two different tires; and/or
wherein step of generating the individual tire pressure deviation data is performed by using correlation analysis; and/or
wherein the step of receiving the at least one vehicle data comprises a separate step of receiving via an interface the at least one vehicle data from at least one of a control unit, a monitoring unit and a sensor unit of the vehicle; and/or
wherein the step of receiving at least one vehicle data comprises a separate step of storing at least one of the at least one vehicle data; and/or
wherein the step of receiving at least one vehicle data comprises a separate step of preprocessing the at least one vehicle data at least with respect to the information indirectly indicating tire pressure to generate the tire pressure indicating data, wherein the preprocessing step preferably includes a step of preprocessing also at least one further data of the at least one vehicle data.

8. The method of claims 6 or 7,
further comprising a separate step of dynamic state detecting to detect at least one of vehicle driving situations and vehicle driving scenarios and to output driving situation/scenario indicating data; and/or
wherein
- the step of dynamic state detecting includes a step of detecting at least one of vehicle driving situations and vehicle driving scenarios on the basis of the at least one vehicle data provided by step of receiving via an interface;
- the step of dynamic state detecting includes a step of detecting at least one of vehicle driving situations and vehicle driving scenarios on the basis of the at least one stored vehicle data stored in the storing step; and
- the step of dynamic state detecting includes a step of detecting at least one of vehicle driving situations and vehicle driving scenarios on the basis of the at least one preprocessed vehicle data from the preprocessing step; and/or
wherein at least one of the step of generating the relative tire pressure unit (12) and the step of generating the individual tire pressure unit (14) includes a step of generating the relative tire pressure deviation data and the individual tire pressure deviation data, respectively, on the basis the driving situation/scenario indicating data.

9. The method of one of the claims 6 to 8,
further comprising a separate step of combining including receiving the relative tire pressure deviation data if being generated by the relative tire pressure unit (12) and the individual tire pressure deviation data if being generated by the individual tire pressure unit (14) and determining, on the basis of received data, tire pressure condition data, which indicate a tire pressure condition of the at least one tire, wherein the combining step preferably includes a step of generating at least one warning data on the basis of the tire pressure condition data, the at least one warning data indicating a tire pressure condition to be warned of; and/or
wherein the at least one vehicle data includes at least one of
- vehicle data indicative of ambient temperature;
- vehicle data indicative of a temperature of an engine of the vehicle;
- vehicle data indicative of an engine torque of an engine of the vehicle;
- vehicle data indicative of a torque acting on the at least one tire;
- vehicle data indicative of a engine speed of an engine of the vehicle;
- vehicle data indicative of a yaw rate of the vehicle;
- vehicle data indicative of a speed of the vehicle;
- vehicle data indicative of at least one of a lateral acceleration and a longitudinal acceleration of the vehicle;
- vehicle data indicative of a steering wheel angle of a steering wheel of the vehicle;
- vehicle data indicative of a driving condition of the vehicle, particularly a braking condition;
- vehicle data indicative that a gear shift of the vehicle is in progress;
- vehicle data indicative that a braking system of the vehicle is operating;
- vehicle data indicative of brake pressure; and
- vehicle data indicative that at least one active control device of the vehicle is active.

10. An indirect tire pressure monitoring system, comprising the device according to one of the claims 1 to 5.

11. The indirect tire pressure monitoring system of claim 10, being adapted to be operated by using the method according to one of the claims 6 to 9.

12. A computer program product for an indirect tire pressure monitoring for detecting tire pressure deviation in tires of a vehicle, the computer program product comprising program code for carrying out, when executed on a processing system, the steps of :
- receiving at least one vehicle data from the vehicle, which at least one vehicle data including information indirectly indicating tire pressure of at least one tire, wherein the at least one vehicle data includes at least data indicating angular velocity and/or rotational speed of the at least one tire;
- generating tire pressure indicating data on the basis of the at least one vehicle data;
- performing a wheel radius analysis, WRA, and generating relative tire pressure deviation data on the basis of the tire pressure indicating data; and
- performing a wheel spectrum analysis, WSA, and generating individual tire pressure deviation data on the basis of the tire pressure indicating data; wherein
- the step of generating relative tire pressure deviation data and the step of generating individual tire pressure deviation data are performed in a manner separate and independent from each other;
further comprising a separate step of diagnosis controlling to perform analysis of the received at least one vehicle data and to generate error indicating data on the basis of the analysis,
wherein the method is disabled if a severe error occurs.

13. The computer program product of claim 12,
further comprising program code for carrying out, when executed on a processing system, at least one of the alternatives of at least one of the claims 6 to 9; and/or
being stored on a computer-readable storage medium or in a computer-readable storage device.

## Patentansprüche

1. Vorrichtung zur indirekten Reifendrucküberwachung zum Erkennen einer Reifendruckabweichung in Reifen eines Fahrzeugs, die umfasst:
- ein Empfangsteil, das dazu eingerichtet ist, wenigstens ein Fahrzeugdatenelement vom Fahrzeug zu empfangen, welches wenigstens eine Fahrzeugdatenelement Informationen umfasst, die den Reifendruck wenigstens eines Reifens indirekt angeben, und basierend auf dem wenigstens einen Fahrzeugdatenelement den Druck angebende Daten zu generieren, wobei das wenigstens eine Fahrzeugdatenelement zumindest Daten umfasst, die eine Winkelgeschwindigkeit und/oder Drehzahl des wenigstens einen Reifens angeben,
- eine Einheit für relativen Reifendruck (12), die angeschlossen ist, um die den Reifendruck angebenden Daten zu empfangen, und dazu eingerichtet ist, eine Radradiusanalyse (WRA/Wheel Radius Analysis) durchzuführen und basierend auf den den Reifendruck angebenden Daten Abweichungsdaten des relativen Reifendrucks zu generieren, und
- eine Einheit für individuellen Reifendruck (14), die angeschlossen ist, um die den Reifendruck angebenden Daten zu empfangen, und dazu eingerichtet ist, eine Radspektrumanalyse (WSA/Wheel Spectrum Analysis) durchzuführen und basierend auf den den Reifendruck angebenden Daten Abweichungsdaten des individuellen Reifendrucks zu generieren,
- wobei die Einheit für relativen Reifendruck (12) und die Einheit für individuellen Reifendruck (14) als separate Einheiten bereitgestellt und dazu eingerichtet sind, ihre jeweiligen Reifendruckabweichungsdaten unabhängig voneinander zu generieren,
- wobei die Vorrichtung ferner eine Diagnosesteuereinheit (8) als separate Einheit umfasst, die dazu eingerichtet ist, eine Analyse des wenigstens einen empfangenen Fahrzeugdatenelements durchzuführen und basierend auf der Analyse Fehler angebende Daten zu generieren,
- wobei die Diagnosesteuereinheit (8) dazu eingerichtet ist, die Vorrichtung zu deaktivieren, wenn ein schwerer Fehler auftritt.

2. Vorrichtung nach Anspruch 1,
- wobei die Einheit für relativen Reifendruck (12) dazu eingerichtet ist, die Abweichungsdaten des relativen Reifendrucks basierend auf Fahrzeugdaten zu generieren, die in Bezug auf wenigstens zwei verschiedene Reifen wenigstens eine Differenz des relativen Reifendrucks angeben, und/oder
- wobei die Einheit für relativen Reifendruck (12) und/oder die Einheit für individuellen Reifendruck (14) dazu eingerichtet ist/sind, die Abweichungsdaten des relativen Reifendrucks basierend auf einer Korrelationsanalyse zu generieren, und/oder
- wobei das Empfangsteil eine Schnittstelleneinheit (4) umfasst, die dazu eingerichtet ist, das wenigstens eine Fahrzeugdatenelement von einer Steuereinheit, einer Überwachungseinheit und/oder einer Sensoreinheit des Fahrzeugs zu empfangen und das wenigstens eine Fahrzeugdatenelement auszugeben, und
- die Schnittstelleneinheit (4) als separate Einheit bereitgestellt ist, und/oder
- wobei das Empfangsteil eine Speichereinheit (6) umfasst, die dazu eingerichtet ist, wenigstens eines des wenigstens einen Fahrzeugdatenelements zu speichern, und
- die Speichereinheit (6) als separate Einheit bereitgestellt ist, und/oder
- wobei das Empfangsteil eine Vorverarbeitungseinheit (10) umfasst, die dazu eingerichtet ist, das wenigstens eine Fahrzeugdatenelement zumindest in Bezug auf die Informationen vorzuverarbeiten, die den Reifendruck indirekt angeben, um die den Reifendruck angebenden Daten zu generieren, und
- die Vorverarbeitungseinheit (10) als separate Einheit bereitgestellt ist, wobei die Vorverarbeitungseinheit (10) bevorzugt dazu eingerichtet ist, ferner wenigstens ein weiteres Datenelement des wenigstens einen Fahrzeugdatenelements vorzuverarbeiten.

3. Vorrichtung nach einem der vorhergehenden Ansprüche, die ferner eine Einheit zum Erkennen eines dynamischen Zustands (16) als separate Einheit umfasst, die dazu eingerichtet ist, Fahrsituationen und/oder Fahrszenarien des Fahrzeugs zu erkennen und Fahrsituationen/- szenarien angebende Daten auszugeben.

4. Vorrichtung nach Anspruch 3,
- wobei die Einheit zum Erkennen eines dynamischen Zustands (16) dazu eingerichtet ist, Fahrsituationen und/oder Fahrszenarien des Fahrzeugs basierend auf dem wenigstens einen Fahrzeugdatenelement zu erkennen, das durch die Schnittstelleneinheit (4) ausgegeben wird,
- wobei die Einheit zum Erkennen eines dynamischen Zustands (16) dazu eingerichtet ist, Fahrsituationen und/oder Fahrszenarien des Fahrzeugs basierend auf dem wenigstens einen gespeicherten Fahrzeugdatenelement der Speichereinheit (6) zu erkennen, und
- wobei die Einheit zum Erkennen eines dynamischen Zustands (16) dazu eingerichtet ist, Fahrsituationen und/oder Fahrszenarien des Fahrzeugs basierend auf dem wenigstens einen vorverarbeiteten Fahrzeugdatenelement der Vorverarbeitungseinheit (10) zu erkennen, und/oder
- wobei die Einheit für relativen Reifendruck (12) und/oder die Einheit für individuellen Reifendruck (14) angeschlossen ist/sind, um die Fahrsituationen/-szenarien angebenden Daten der Einheit zum Erkennen eines dynamischen Zustands (16) zu empfangen und die Abweichungsdaten des relativen Reifendrucks bzw. die Abweichungsdaten des individuellen Reifendrucks basierend auf den Fahrsituationen/-szenarien angebenden Daten zu generieren.

5. Vorrichtung nach einem der vorhergehenden Ansprüche,
- die ferner eine Kombinationseinheit (18) als separate Einheit umfasst, die angeschlossen ist, um die Abweichungsdaten des relativen Reifendrucks zu empfangen, sofern diese durch die Einheit für relativen Reifendruck (12) generiert werden, und die Abweichungsdaten des individuellen Reifendrucks zu empfangen, sofern diese durch die Einheit für individuellen Reifendruck (14) generiert werden, und die dazu eingerichtet ist, basierend auf den empfangenen Daten Reifendruckzustandsdaten zu bestimmen, die einen Reifendruckzustand des wenigstens einen Reifens angeben, wobei die Kombinationseinheit (18) bevorzugt dazu eingerichtet ist, basierend auf den Reifendruckzustandsdaten wenigstens ein Warndatenelement zu generieren, wobei das wenigstens eine Warndatenelement einen Reifendruckzustand angibt, vor dem gewarnt werden soll, und/oder
- wobei das wenigstens eine Fahrzeugdatenelement umfasst:
- Fahrzeugdaten, die eine Umgebungstemperatur angeben,
- Fahrzeugdaten, die eine Temperatur eines Verbrennungsmotors des Fahrzeugs angeben,
- Fahrzeugdaten, die ein Motordrehmoment eines Verbrennungsmotors des Fahrzeugs angeben,
- Fahrzeugdaten, die ein auf den wenigstens einen Reifen wirkendes Drehmoment angeben,
- Fahrzeugdaten, die eine Motordrehzahl eines Verbrennungsmotors des Fahrzeugs angeben,
- Fahrzeugdaten, die eine Giergeschwindigkeit des Fahrzeugs angeben,
- Fahrzeugdaten, die eine Geschwindigkeit des Fahrzeugs angeben,
- Fahrzeugdaten, die eine Querbeschleunigung und/oder eine Längsbeschleunigung des Fahrzeugs angeben,
- Fahrzeugdaten, die einen Lenkradwinkel eines Lenkrads des Fahrzeugs angeben,
- Fahrzeugdaten, die einen Fahrzustand des Fahrzeugs, insbesondere einen Bremszustand, angeben,
- Fahrzeugdaten, die angeben, dass eine Gangschaltung des Fahrzeugs stattfindet,
- Fahrzeugdaten, die angeben, dass ein Bremssystem des Fahrzeugs arbeitet,
- Fahrzeugdaten, die einen Bremsdruck angeben, und/oder
- Fahrzeugdaten, die angeben, dass wenigstens eine aktive Steuereinrichtung des Fahrzeugs aktiv ist.

6. Verfahren zur indirekten Reifendrucküberwachung zum Erkennen einer Reifendruckabweichung in Reifen eines Fahrzeugs, das die Schritte umfasst:
- Empfangen wenigstens eines Fahrzeugdatenelements vom Fahrzeug, welches wenigstens eine Fahrzeugdatenelement Informationen umfasst, die den Reifendruck wenigstens eines Reifens indirekt angeben, wobei das wenigstens eine Fahrzeugdatenelement zumindest Daten umfasst, die eine Winkelgeschwindigkeit und/oder Drehzahl des wenigstens einen Reifens angeben,
- Generieren von den Reifendruck angebenden Daten basierend auf dem wenigstens einen Fahrzeugdatenelement,
- Durchführen einer Radradiusanalyse (WRA/Wheel Radius Analysis) und Generieren von Abweichungsdaten des relativen Reifendrucks basierend auf den den Reifendruck angebenden Daten, und
- Durchführen einer Radspektrumanalyse (WSA/Wheel Spectrum Analysis) und Generieren von Abweichungsdaten des individuellen Reifendrucks basierend auf den den Reifendruck angebenden Daten,
- wobei der Schritt zum Generieren von Abweichungsdaten des relativen Reifendrucks und der Schritt zum Generieren von Abweichungsdaten des individuellen Reifendrucks separat und unabhängig voneinander durchgeführt werden,
- wobei das Verfahren ferner einen separaten Schritt zur Diagnosesteuerung umfasst, um eine Analyse des wenigstens einen empfangenen Fahrzeugdatenelements durchzuführen und basierend auf der Analyse Fehler angebende Daten zu generieren,
- wobei das Verfahren deaktiviert wird, wenn ein schwerer Fehler auftritt.

7. Verfahren nach Anspruch 6,
- wobei der Schritt zum Generieren der Abweichungsdaten des relativen Reifendrucks basierend auf Fahrzeugdaten durchgeführt wird, die in Bezug auf wenigstens zwei verschiedene Reifen wenigstens eine Reifendruckdifferenz angeben, und/oder
- wobei der Schritt zum Generieren der Abweichungsdaten des individuellen Reifendrucks unter Verwendung einer Korrelationsanalyse durchgeführt wird, und/oder
- wobei der Schritt zum Empfangen des wenigstens einen Fahrzeugdatenelements einen separaten Schritt zum Empfangen des wenigstens einen Fahrzeugdatenelements von einer Steuereinheit, einer Überwachungseinheit und/oder einer Sensoreinheit des Fahrzeugs über eine Schnittstelle umfasst, und/oder
- wobei der Schritt zum Empfangen wenigstens eines Fahrzeugdatenelements einen separaten Schritt zum Speichern wenigstens eines des wenigstens einen Fahrzeugdatenelements umfasst, und/oder
- wobei der Schritt zum Empfangen wenigstens eines Fahrzeugdatenelements einen separaten Schritt zum Vorverarbeiten des wenigstens einen Fahrzeugdatenelements zumindest in Bezug auf die Informationen umfasst, die den Reifendruck indirekt angeben, um die den Reifendruck angebenden Daten zu generieren, wobei der Vorverarbeitungsschritt bevorzugt ferner einen Schritt zum Vorverarbeiten wenigstens eines weiteren Datenelements des wenigstens einen Fahrzeugdatenelements umfasst.

8. Verfahren nach Anspruch 6 oder 7, das ferner einen separaten Schritt zum Erkennen eines dynamischen Zustands umfasst, um Fahrsituationen und/oder Fahrszenarien des Fahrzeugs zu erkennen und Fahrsituationen/-szenarien angebende Daten auszugeben, und/oder wobei
- der Schritt zum Erkennen eines dynamischen Zustands einen Schritt zum Erkennen von Fahrsituationen und/oder Fahrszenarien des Fahrzeugs basierend auf dem wenigstens einen Fahrzeugdatenelement umfasst, das durch den Schritt zum Empfangen über eine Schnittstelle bereitgestellt wird,
- der Schritt zum Erkennen eines dynamischen Zustands einen Schritt zum Erkennen von Fahrsituationen und/oder Fahrszenarien des Fahrzeugs basierend auf dem wenigstens einen gespeicherten Fahrzeugdatenelement umfasst, das im Speicherschritt gespeichert wird, und
- der Schritt zum Erkennen eines dynamischen Zustands einen Schritt zum Erkennen von Fahrsituationen und/oder Fahrszenarien des Fahrzeugs basierend auf dem wenigstens einen vorverarbeiteten Fahrzeugdatenelement aus dem Vorverarbeitungsschritt umfasst, und/oder
- wobei der Schritt zum Generieren durch die Einheit des relativen Reifendrucks (12) und/oder der Schritt zum Generieren durch die Einheit für individuellen Reifendruck (14) einen Schritt zum Generieren der Abweichungsdaten des relativen Reifendrucks bzw. der Abweichungsdaten des individuellen Reifendrucks basierend auf den Fahrsituationen/- szenarien angebenden Daten umfasst.

9. Verfahren nach einem der Ansprüche 6 bis 8,
- das ferner einen separaten Schritt zum Kombinieren umfasst, der das Empfangen der Abweichungsdaten des relativen Reifendrucks, sofern diese durch die Einheit für relativen Reifendruck (12) generiert werden, und der Abweichungsdaten des individuellen Reifendrucks umfasst, sofern diese durch die Einheit für individuellen Reifendruck (14) generiert werden, und das Bestimmen von Reifendruckzustandsdaten, die einen Reifendruckzustand des wenigstens einen Reifens angeben, basierend auf den empfangenen Daten umfasst, wobei der Kombinationsschritt bevorzugt einen Schritt zum Generieren wenigstens eines Warndatenelements basierend auf den Reifendruckzustandsdaten umfasst, wobei das wenigstens eine Warndatenelement einen Reifendruckzustand angibt, vor dem gewarnt werden soll, und/oder
- wobei das wenigstens eine Fahrzeugdatenelement umfasst:
- Fahrzeugdaten, die eine Umgebungstemperatur angeben,
- Fahrzeugdaten, die eine Temperatur eines Verbrennungsmotors des Fahrzeugs angeben,
- Fahrzeugdaten, die ein Motordrehmoment eines Verbrennungsmotors des Fahrzeugs angeben,
- Fahrzeugdaten, die ein auf den wenigstens einen Reifen wirkendes Drehmoment angeben,
- Fahrzeugdaten, die eine Motordrehzahl eines Verbrennungsmotors des Fahrzeugs angeben,
- Fahrzeugdaten, die eine Giergeschwindigkeit des Fahrzeugs angeben,
- Fahrzeugdaten, die eine Geschwindigkeit des Fahrzeugs angeben,
- Fahrzeugdaten, die eine Querbeschleunigung und/oder eine Längsbeschleunigung des Fahrzeugs angeben,
- Fahrzeugdaten, die einen Lenkradwinkel eines Lenkrads des Fahrzeugs angeben,
- Fahrzeugdaten, die einen Fahrzustand des Fahrzeugs, insbesondere einen Bremszustand, angeben,
- Fahrzeugdaten, die angeben, dass eine Gangschaltung des Fahrzeugs stattfindet,
- Fahrzeugdaten, die angeben, dass ein Bremssystem des Fahrzeugs arbeitet,
- Fahrzeugdaten, die einen Bremsdruck angeben, und/oder
- Fahrzeugdaten, die angeben, dass wenigstens eine aktive Steuereinrichtung des Fahrzeugs aktiv ist.

10. Indirektes Reifendrucküberwachungssystem, das die Vorrichtung nach einem der Ansprüche 1 bis 5 umfasst.

11. Indirektes Reifendrucküberwachungssystem nach Anspruch 10, das dazu eingerichtet ist, unter Verwendung des Verfahrens nach einem der Ansprüche 6 bis 9 betrieben zu werden.

12. Computerprogrammprodukt zur indirekten Reifendrucküberwachung zum Erkennen einer Reifendruckabweichung in Reifen eines Fahrzeugs, wobei das Computerprogrammprodukt einen Programmcode umfasst, der, wenn er in einem Verarbeitungssystem ausgeführt wird, folgende Schritte durchführt:
- Empfangen wenigstens eines Fahrzeugdatenelements vom Fahrzeug, welches wenigstens eine Fahrzeugdatenelement Informationen umfasst, die den Reifendruck wenigstens eines Reifens indirekt angeben, wobei das wenigstens eine Fahrzeugdatenelement zumindest Daten umfasst, die eine Winkelgeschwindigkeit und/oder Drehzahl des wenigstens einen Reifens angeben,
- Generieren von den Reifendruck angebenden Daten basierend auf dem wenigstens einen Fahrzeugdatenelement,
- Durchführen einer Radradiusanalyse (WRA/Wheel Radius Analysis) und Generieren von Abweichungsdaten des relativen Reifendrucks basierend auf den den Reifendruck angebenden Daten, und
- Durchführen einer Radspektrumanalyse (WSA/Wheel Spectrum Analysis) und Generieren von Abweichungsdaten des individuellen Reifendrucks basierend auf den den Reifendruck angebenden Daten,
- wobei der Schritt zum Generieren von Abweichungsdaten des relativen Reifendrucks und der Schritt zum Generieren von Abweichungsdaten des individuellen Reifendrucks separat und unabhängig voneinander durchgeführt werden,
- wobei der Programmcode ferner einen separaten Schritt zur Diagnosesteuerung umfasst, um eine Analyse des wenigstens einen empfangenen Fahrzeugdatenelements durchzuführen und basierend auf der Analyse Fehler angebende Daten zu generieren,
- wobei das Verfahren deaktiviert wird, wenn ein schwerer Fehler auftritt.

13. Computerprogrammprodukt nach Anspruch 12,
- das ferner einen Programmcode umfasst, der, wenn er in einem Verarbeitungssystem ausgeführt wird, wenigstens eine der Alternativen nach wenigstens einem der Ansprüche 6 bis 9 durchführt, und/oder
- das in einem computerlesbaren Speichermedium oder einer computerlesbaren Speichereinrichtung gespeichert ist.

## Revendications

1. Dispositif pour la surveillance indirecte de la pression de pneu pour détecter un écart de pression de pneu dans des pneus d'un véhicule, comprenant :
- une partie de réception étant adaptée pour recevoir au moins une donnée de véhicule provenant du véhicule, laquelle au moins une donnée de véhicule incluant des informations indiquant indirectement une pression de pneu d'au moins un pneu, et étant adaptée pour générer des données d'indication de pression sur la base de l'au moins une donnée de véhicule, dans lequel l'au moins une donnée de véhicule inclut au moins des données indiquant la vélocité angulaire et/ou la vitesse de rotation de l'au moins un pneu ;
- une unité de pression de pneu relative (12) étant couplée pour recevoir les données d'indication de pression de pneu et étant adaptée pour effectuer une analyse de rayon de roue, WRA, et pour générer des données d'écart de pression de pneu relative sur la base des données d'indication de pression de pneu ; et
- une unité de pression de pneu individuelle (14) étant couplée pour recevoir les données d'indication de pression de pneu et étant adaptée pour effectuer une analyse de spectre de roue, WSA, et pour générer des données d'écart de pression de pneu individuelle sur la base des données d'indication de pression de pneu ;
- l'unité de pression de pneu relative (12) et l'unité de pression de pneu individuelle (14) étant fournies en tant qu'unités séparées et étant adaptées pour générer leurs données d'écart de pression de pneu respectives indépendamment l'une de l'autre ;
comprenant en outre, en tant qu'unité séparée, une unité de commande de diagnostic (8), qui est adaptée pour effectuer une analyse de l'au moins une donnée de véhicule reçue et pour générer des données d'indication d'erreur sur la base de l'analyse,
dans lequel l'unité de commande de diagnostic (8) est adaptée pour désactiver le dispositif si une erreur grave survient.

2. Dispositif selon la revendication 1,
dans lequel l'unité de pression de pneu relative (12) est adaptée pour générer les données d'écart de pression de pneu relative sur la base de données de véhicule indiquant au moins une différence de pression de pneu relative par rapport à au moins deux pneus différents ; et/ou
dans lequel au moins l'une parmi l'unité de pression de pneu relative (12) et l'unité de pression de pneu individuelle (14) est adaptée pour générer les données d'écart de pression de pneu relative sur la base d'une analyse de corrélation ; et/ou
dans lequel
- la partie de réception comprend une unité d'interface (4) étant adaptée pour recevoir l'au moins une donnée de véhicule en provenance d'au moins une parmi une unité de commande, une unité de surveillance et une unité de capteur du véhicule et étant adaptée pour délivrer en sortie l'au moins une donnée de véhicule ; et
- l'unité d'interface (4) est fournie en tant qu'unité séparée ; et/ou
dans lequel
- la partie de réception comprend une unité de mémoire (6) étant adaptée pour stocker au moins une des au moins une donnée de véhicule ; et
- l'unité de mémoire (6) est fournie en tant qu'unité séparée et/ou
dans lequel
- la partie de réception comprend une unité de prétraitement (10) étant adaptée pour prétraiter l'au moins une donnée de véhicule au moins par rapport aux informations indiquant indirectement la pression de pneu pour générer les données d'indication de pression de pneu ; et
- l'unité de prétraitement (10) est fournie en tant qu'unité séparée, dans lequel l'unité de prétraitement (10) est de préférence adaptée pour prétraiter également au moins une autre donnée de l'au moins une donnée de véhicule.

3. Dispositif selon l'un des revendications précédentes, comprenant en outre, en tant qu'unité séparée, une unité de détection d'état dynamique (16), qui est adaptée pour détecter au moins un parmi des situations de conduite de véhicule et des scénarios de conduite de véhicule et pour délivrer en sortie des données d'indication de situation/scénario de conduite.

4. Dispositif selon la revendication 3
- dans lequel l'unité de détection d'état dynamique (16) est adaptée pour détecter au moins l'un parmi des situations de conduite de véhicule et des scénarios de conduite de véhicule sur la base de l'au moins une donnée de véhicule délivrée en sortie par l'unité d'interface (4) ;
- dans lequel l'unité de détection d'état dynamique (16) est adaptée pour détecter au moins l'un parmi des situations de conduite de véhicule et des scénarios de conduite de véhicule sur la base de l'au moins une donnée de véhicule stockée provenant de l'unité de mémoire (6) ; et
- l'unité de détection d'état dynamique (16) est adaptée pour détecter au moins l'un parmi des situations de conduite de véhicule et des scénarios de conduite de véhicule sur la base de l'au moins une donnée de véhicule prétraitée provenant de l'unité de prétraitement (10) ; et/ou
dans lequel au moins l'une parmi l'unité de pression de pneu relative (12) et l'unité de pression de pneu individuelle (14) étant couplée pour recevoir les données d'indication de situation/scénario de conduite en provenance de l'unité de détection d'état dynamique (16) et pour générer les données d'écart de pression de pneu relative et les données d'écart de pression de pneu individuelle, respectivement, sur la base des données d'indication de situation/scénario de conduite.

5. Dispositif selon l'une des revendications précédentes,
comprenant en outre, en tant qu'unité séparée, une unité de combinaison (18) étant couplée pour recevoir les données d'écart de pression de pneu relative si elles sont générées par l'unité de pression de pneu relative (12) et les données d'écart de pression de pneu individuelle si elles sont générées par l'unité de pression de pneu individuelle (14) et étant adaptée pour déterminer, sur la base de données reçues, des données d'état de pression de pneu, qui indiquent un état de pression de pneu de l'au moins un pneu, dans lequel l'unité de combinaison (18) est de préférence adaptée pour générer au moins une donnée d'avertissement sur la base des données d'état de pression de pneu, l'au moins une donnée d'avertissement indiquant un état de pression de pneu dont il faut être averti ; et/ou
dans lequel l'au moins une donnée de véhicule inclut au moins une parmi
- une donnée de véhicule indicative de la température ambiante ;
- une donnée de véhicule indicative d'une température d'un moteur du véhicule ;
- une donnée de véhicule indicative d'un couple moteur d'un moteur du véhicule ;
- une donnée de véhicule indicative d'un couple agissant sur l'au moins un pneu ;
- une donnée de véhicule indicative d'une vitesse de moteur d'un moteur du véhicule ;
- une donnée de véhicule indicative d'une vitesse de lacet du véhicule ;
- une donnée de véhicule indicative d'une vitesse du véhicule ;
- une donnée de véhicule indicative d'au moins une parmi une accélération latérale et une accélération longitudinale du véhicule ;
- une donnée de véhicule indicative d'un angle de volant d'un volant du véhicule ;
- une donnée de véhicule indicative d'un état de conduite du véhicule, en particulier un état de freinage ;
- une donnée de véhicule indiquant qu'un changement de vitesse du véhicule est en cours ;
- une donnée de véhicule indiquant qu'un système de freinage du véhicule fonctionne ;
- une donnée de véhicule indicative d'une pression de frein ; et
- une donnée de véhicule indiquant qu'au moins un dispositif de commande active du véhicule est actif.

6. Procédé de surveillance indirecte de la pression de pneu pour détecter un écart de pression de pneu dans des pneus d'un véhicule, comprenant les étapes de :
- réception d'au moins une donnée de véhicule provenant du véhicule, laquelle au moins une donnée de véhicule incluant des informations indiquant indirectement une pression de pneu d'au moins un pneu, dans lequel l'au moins une donnée de véhicule inclut au moins des données indiquant la vélocité angulaire et/ou la vitesse de rotation de l'au moins un pneu ;
- génération de données d'indication de pression de pneu sur la base de l'au moins une donnée de véhicule ;
- réalisation d'une analyse de rayon de roue, WRA, et génération de données d'écart de pression de pneu relative sur la base des données d'indication de pression de pneu ; et
- réalisation d'une analyse de spectre de roue, WSA, et génération de données d'écart de pression de pneu individuelle sur la base des données d'indication de pression de pneu ; dans lequel
- l'étape de génération de données d'écart de pression de pneu relative et l'étape de génération de données d'écart de pression de pneu individuelle sont effectuées d'une manière séparée et indépendamment l'une de l'autre ;
comprenant en outre une étape séparée de commande de diagnostic pour effectuer une analyse de l'au moins une donnée de véhicule reçue et pour générer des données d'indication d'erreur sur la base de l'analyse,
dans lequel le procédé est désactivé si une erreur grave survient.

7. Procédé selon la revendication 6,
dans lequel l'étape de génération des données d'écart de pression de pneu relative est effectuée sur la base de données de véhicule indiquant au moins une différence de pression de pneu par rapport à au moins deux pneus différents ; et/ou
dans lequel l'étape de génération des données d'écart de pression de pneu individuelle est effectuée en utilisant une analyse de corrélation ; et/ou
dans lequel l'étape de réception de l'au moins une donnée de véhicule comprend une étape séparée de réception via une interface de l'au moins une donnée de véhicule en provenance d'au moins une parmi une unité de commande, une unité de surveillance et une unité de capteur du véhicule ; et/ou
dans lequel l'étape de réception d'au moins une donnée de véhicule comprend une étape séparée de stockage d'au moins une de l'au moins une donnée de véhicule ; et/ou
dans lequel l'étape de réception d'au moins une donnée de véhicule comprend une étape séparée de prétraitement de l'au moins une donnée de véhicule au moins par rapport aux informations indiquant indirectement la pression de pneu pour générer les données d'indication de pression de pneu, dans lequel l'étape de prétraitement inclut de préférence également une étape de prétraitement d'au moins une autre donnée de l'au moins une donnée de véhicule.

8. Procédé selon la revendication 6 ou 7,
comprenant en outre une étape séparée de détection d'état dynamique pour détecter au moins un parmi des situations de conduite de véhicule et des scénarios de conduite de véhicule et pour délivrer en sortie des données d'indication de situation/scénario de conduite ; et/ou
dans lequel
- l'étape de détection d'état dynamique inclut une étape de détection d'au moins un parmi des situations de conduite de véhicule et des scénarios de conduite de véhicule sur la base de l'au moins une donnée de véhicule fournie par l'étape de réception via une interface ;
- l'étape de détection d'état dynamique inclut une étape de détection d'au moins un parmi des situations de conduite de véhicule et des scénarios de conduite de véhicule sur la base de l'au moins une donnée de véhicule stockée qui est stockée à l'étape de stockage ; et
- l'étape de détection d'état dynamique inclut une étape de détection d'au moins un parmi des situations de conduite de véhicule et des scénarios de conduite de véhicule sur la base de l'au moins une donnée de véhicule prétraitée issue de l'étape de prétraitement ; et/ou
dans lequel au moins l'une parmi l'étape de génération de l'unité de pression de pneu relative (12) et l'étape de génération de l'unité de pression de pneu individuelle (14) inclut une étape de génération des données d'écart de pression de pneu relative et des données d'écart de pression de pneu individuelle, respectivement, sur la base des données d'indication de situation/scénario de conduite.

9. Procédé selon l'une des revendications 6 à 8,
comprenant en outre une étape séparée de combinaison incluant la réception des données d'écart de pression de pneu relative si elles sont générées par l'unité de pression de pneu relative (12) et des données d'écart de pression de pneu individuelle si elles sont générées par l'unité de pression de pneu individuelle (14) et de détermination, sur la base de données reçues, de données d'état de pression de pneu, qui indiquent un état de pression de pneu de l'au moins un pneu, dans lequel l'étape de combinaison inclut de préférence une étape de génération d'au moins une donnée d'avertissement sur la base des données d'état de pression de pneu, l'au moins une donnée d'avertissement indiquant un état de pression de pneu dont il faut être averti ; et/ou
dans lequel l'au moins une donnée de véhicule inclut au moins une parmi
- une donnée de véhicule indicative de la température ambiante ;
- une donnée de véhicule indicative d'une température d'un moteur du véhicule ;
- une donnée de véhicule indicative d'un couple moteur d'un moteur du véhicule ;
- une donnée de véhicule indicative d'un couple agissant sur l'au moins un pneu ;
- une donnée de véhicule indicative d'une vitesse de moteur d'un moteur du véhicule ;
- une donnée de véhicule indicative d'une vitesse de lacet du véhicule ;
- une donnée de véhicule indicative d'une vitesse du véhicule ;
- une donnée de véhicule indicative d'au moins une parmi une accélération latérale et une accélération longitudinale du véhicule ;
- une donnée de véhicule indicative d'un angle de volant d'un volant du véhicule ;
- une donnée de véhicule indicative d'un état de conduite du véhicule, en particulier un état de freinage ;
- une donnée de véhicule indiquant qu'un changement de vitesse du véhicule est en cours ;
- une donnée de véhicule indiquant qu'un système de freinage du véhicule fonctionne ;
- une donnée de véhicule indicative d'une pression de frein ; et
- une donnée de véhicule indiquant qu'au moins un dispositif de commande active du véhicule est actif.

10. Système de surveillance indirecte de la pression de pneu, comprenant le dispositif selon l'une des revendications 1 à 5.

11. Système de surveillance indirecte de la pression de pneu selon la revendication 10, étant adapté pour être actionné en utilisant le procédé selon l'une des revendications 6 à 9.

12. Produit de programme informatique pour une surveillance indirecte de la pression de pneu pour détecter un écart de pression de pneu dans des pneus d'un véhicule, le produit de programme informatique comprenant un code de programme pour réaliser, lorsqu'il est exécuté sur un système de traitement, les étapes de :
- réception d'au moins une donnée de véhicule provenant du véhicule, laquelle au moins une donnée de véhicule incluant des informations indiquant indirectement une pression de pneu d'au moins un pneu, dans lequel l'au moins une donnée de véhicule inclut au moins des données indiquant la vélocité angulaire et/ou la vitesse de rotation de l'au moins un pneu ;
- génération de données d'indication de pression de pneu sur la base de l'au moins une donnée de véhicule ;
- réalisation d'une analyse de rayon de roue, WRA, et génération de données d'écart de pression de pneu relative sur la base des données d'indication de pression de pneu ; et
- réalisation d'une analyse de spectre de roue, WSA, et génération de données d'écart de pression de pneu individuelle sur la base des données d'indication de pression de pneu ; dans lequel
- l'étape de génération de données d'écart de pression de pneu relative et l'étape de génération de données d'écart de pression de pneu individuelle sont effectuées d'une manière séparée et indépendamment l'une de l'autre ;
comprenant en outre une étape séparée de commande de diagnostic pour effectuer une analyse de l'au moins une donnée de véhicule reçue et pour générer des données d'indication d'erreur sur la base de l'analyse,
dans lequel le procédé est désactivé si une erreur grave survient.

13. Produit de programme informatique selon la revendication 12,
comprenant en outre un code de programme pour réaliser, lorsqu'il est exécuté sur un système de traitement, au moins l'une des alternatives d'au moins une des revendications 6 à 9 ; et/ou
étant stocké sur un support de stockage lisible par ordinateur ou dans un dispositif de stockage lisible par ordinateur.
